# EUROPEAN PATENT SPECIFICATION

(11) **EP 3 349 955 B1**
(45) Date of publication and mention of the grant of the patent: **09.12.2020**
(21) Application number: 16846960.9
(22) Date of filing: 15.09.2016
(51) Int. Cl.: B27M 3/00, B05C 1/16, B27G 11/00, B27N 3/18, B32B 37/00

(54) **A METHOD OF AND A SELECTIVE STRIP COATING APPARATUS FOR APPLYING A COATING TO ONE FACE OF A SELECTED FIRST SUB-GROUP OF PARALLEL STRIPS**
VERFAHREN UND SELEKTIVE BANDBESCHICHTUNGSVORRICHTUNG ZUM AUFBRINGEN EINER BESCHICHTUNG AUF EINER SEITE EINER AUSGEWÄHLTEN ERSTEN TEILGRUPPE VON PARALLELEN BÄNDERN
PROCÉDÉ ET APPAREIL DE REVÊTEMENT À BANDE SÉLECTIF POUR APPLIQUER UN REVÊTEMENT SUR UNE FACE D'UN PREMIER SOUS-GROUPE SÉLECTIONNÉ DE BANDES PARALLÈLES

(30) Priority: 17.09.2015 SE 1551199
(43) Date of publication of application: 25.07.2018
(73) Proprietor: IKEA Supply AG, 4133 Pratteln (CH)
(72) Inventor: ANDREASSON, Bengt, 423 53 Torslanda (SE)
(74) Representative: Ström & Gulliksson AB
(86) International application number: PCT/SE2016/050865
(87) International publication number: WO 2017/048183

(56) References cited:
- EP-A2- 1 468 798
- FR-A1- 2 077 902
- GB-A- 659 140
- US-A- 2 488 759
- US-A- 3 191 522
- US-A- 3 372 673
- US-A- 4 101 370
- US-A- 4 943 328
- US-A- 5 141 582
- US-A1- 2002 026 988
- US-A1- 2006 147 637
- US-B1- 6 221 158

## Description

### TECHNICAL FIELD

The present invention relates to a method of applying a coating to one face of a selected first sub-group of parallel strips, the selected first sub-group of parallel strips comprising at least two parallel strips and being selected from a plurality of parallel strips advanced in a side by side relationship from a first support member to a second support member, at least two strips of said plurality of parallel strips not belonging to said selected first sub-group of parallel strips forming a second sub-group of parallel strips.

It also applies to a selective strip coating apparatus for applying a coating to one face of a selected first sub-group of parallel strips, the selected first sub-group of parallel strips comprising at least two parallel strips and being selected from a plurality of parallel strips advanced in a side by side relationship from a first support member to a second support member, at least two strips of said plurality of parallel strips not belonging to said selected first sub-group of parallel strips forming a second sub-group of parallel strips.

Further, it also relates to a rod manufacturing apparatus, which comprises the selective strip coating apparatus.

### BACKGROUND ART

In furniture manufacturing, for example, low weight elements are widely used. Such elements usually consist of a hollow body having two parallel large sheets spaced apart by a lightweight filling material. One suitable lightweight filling material is formed by strips of a wooden material, preferably a material selected among High Density Fiberboard (HDF) and Medium Density Fiberboard (MDF). The strips extend widthwise between the two sheets of the hollow body and the edges of the strips are glued to the two sheets. To give the low weight elements sufficient stability, the lightweight filling material includes wooden rods attached by gluing to the side edges of the two sheets to interconnect the two sheets to each other.

Such low weight elements can be used as building elements, door panels, and a large amount of furniture elements. Consequently, a plurality of manufacturing methods for such low weight elements have been presented.

A method of continuous manufacture of a composite hollow board material comprising a first surface and a second surface, and between the first and second surfaces a plurality of distance members is disclosed in US 8,999,094 (Pettersson et al.). The method comprises providing material for the first surface from a first reel via a first guide roller towards an output lane; providing material for the second surface from a second reel via a second guide roller towards the output lane; and providing material for the distance members from a third reel towards the output lane such that the distance members comprises strips arranged, at any cross section perpendicular to the first and second surfaces and the direction of the output lane, perpendicular to the first and second surfaces and continuous along the output lane. The providing of material for the distance members comprises guiding at least some of the strips in a meandering pattern, and applying an adhesive to contact the strips on opposite edges thereof such that adhesion to the material of the first and second surfaces is enabled. The first and second guide rollers press the material of the first and second surfaces to the opposite edges of the strips, respectively, such that the material of the first and second surfaces are adhered to the strips. A machine for continuous manufacture of the composite hollow board material, and a computer program for controlling a machine for continuous manufacture of the composite hollow board material are also disclosed.

In the '094 document it is also disclosed that a plurality of strips may be joined by adhesive to form a lath or rod to be used as a distance member in the composite hollow board material. The part for preparing the lath or rod can include a cutting mechanism for cutting a sheet material into a plurality of strips. The preparation part comprises a guide mechanism for assembling the strips to run in parallel towards the output lane. An adhesive application mechanism applies adhesive such that the parallel strips can be adhered to each other. The preparation part also comprises a press mechanism such that the sandwiched parallel strips, after application of the adhesive, are pressed together and thus adhered to each other such that the lath or rod is achieved.

From FR2077902 and US 5141582 there are known two different methods presenting a general kind of prior art related to forming a single piece of a panel assembly of desired curvature by means of gluing and pressing.

### SUMMARY OF THE INVENTION

The object of the present invention is to provide cost efficient and flexible joining of strips to form distance elements of different dimensions, such as rods or laths to be used in low weight building elements for furniture.

In the method according to the invention, this object is achieved in that the method comprises:
- advancing a selected first sub-group of parallel strips along a first path between the first and second support members, said first path extending from a first point, being located adjacent to the first support member and at a first distance from a longitudinal axis of the first support member, to a second point, being located adjacent to the second support member;
- simultaneously therewith advancing a second sub-group of parallel strips along a second path between the first and second support members, said second path extending from a third point, being located adjacent to the first support member and at a second distance from said longitudinal axis of the first support member, said second distance being shorter than said first distance, to a fourth point adjacent to the second support member; and
- applying the coating by means of a coating device being in coating contact with the selected first sub-group of parallel strips passing the first support member at the first distance to coat one side of the strips of the selected first sub-group of parallel strips, while the strips of the second sub-group of parallel strips simultaneously passing the first support member at the second distance being out of reach of the coating device and remaining uncoated.

Hereby, only the strips that are desired to coat may be coated on one side only, and a basis for providing a cost efficient and flexible joining of strips is provided.

Preferably, the method further comprises arranging the plurality of parallel strips in a pattern of strip-groups, where each strip-group contains at least one, and more preferably at least two, neighboring strip(s) from the selected first sub-group of parallel strips to be coated and at least one strip from the second sub-group of parallel strips to remain uncoated. Thereby, only one side of the strips, which are to be piled on one another to form a sandwiched cluster in the shape of a rod or lath, has to be coated, with the exception of the "last" strip that is uncoated in each cluster.

Alternatively or additionally the method further comprises:
- providing said first support member in the form of a support bar having a plurality of ridge surfaces located at the first distance from the longitudinal axis of the first support member and a plurality of grooves arranged between the ridge surfaces and located at the second distance from the longitudinal axis of the first support member;
- forwarding each one of the strips of the selected first sub-group of parallel strips on a respective one of the ridge surfaces to be in contact with the coating device to coat a face of the strips of the first sub-group of parallel strips; and
- forwarding each one of the strips of the second sub-group of parallel strips in one of the grooves to remain out of reach of the coating device.

By using a support bar having a plurality of ridge surfaces and a plurality of grooves between the ridge surfaces, a cost efficient and flexible gluing together of strips to form distance elements of different dimensions can be achieved.

To glue the strips together to form the desired cluster, the coating that is applied to the selected first sub-group of parallel strips suitably is an adhesive type of coating.

Suitably the strips are made from a wooden material, preferably a material selected among High Density Fiberboard (HDF) and Medium Density Fiberboard (MDF). Such fiberboard is eco-friendly and may be used also for the other distance elements and the covering sheets of the low weight building element, which contributes to the cost efficiency of the method of the present invention.

Preferably, the plurality of parallel strips are, downstream of the first support member, arranged in clusters, each such cluster comprising at least two, more preferably at least three, strips, the strips of each such cluster being pressed together to form a rod having a sandwiched structure. Thereby, it is easy to modify the method to cost efficiently produce rods or laths of different dimensions.

Preferably, each cluster comprises at least one, more preferably two to twenty, and most preferably two to eight, strip(s) of the selected first sub-group of parallel strips and exactly one strip of the second sub-group of parallel strips. An advantage of this embodiment is that a lath or rod can be manufactured with good mechanical properties and with a low consumption of adhesive.

In the selective strip coating apparatus stated in the second paragraph above, the object of the invention is achieved in that the selective strip coating apparatus comprises:
- a support bar forming the first support member and having a longitudinal axis and a plurality of ridge surfaces located at a first distance from the axis of the support bar and adapted for carrying strips of the selected first sub-group of parallel strips, and a plurality of grooves arranged adjacent the ridge surfaces and located at a second distance from the axis of the support bar, said second distance being shorter than said first distance and adapted for housing strips of the second sub-group of parallel strips; and
- a coating device positioned to be in operative contact with the strips of the selected first sub-group of strips carried by the respective ridge surfaces of the support bar, while the strips of the second sub-group of strips will be carried in the grooves and out of reach of the coating device and remain uncoated.

Hereby, only the strips that are desired to coat are coated, and a basis for a providing a cost efficient and flexible joining of strips is provided.

Suitably, the support bar has the form of a support roll.

Preferably, the support roll is a rotary support roll adapted to rotate around its central axis as the first sub-group of strips are carried by the respective ridge surfaces, and the ridge surfaces and the grooves extend circumferentially around the rotary support roll. The substitution of a rotary support roll for the support bar makes the apparatus less sensitive to functional trouble.

To make the strips adhere reliably to one another when piled to form a sandwiched cluster, the coating device suitably is an adhesive coating device.

The grooves in the support bar suitably are arranged in such a way that the ridge surfaces between two adjacent grooves will receive a plurality of the strips of the selected first sub-group of parallel strips to be coated.

The grooves and the ridge surfaces are preferably arranged in such a way that they form a pattern of strip-groups, where each strip-group will receive at least one strip of the first sub-group to be coated and at least one strip of the second sub-group that is to remain uncoated. Thereby, only one side of the strips, which are to be piled on one another to form a sandwiched cluster in the shape of a rod or lath, has to be coated, with the exception of the "last" strip of each cluster.

Then, each strip-group is suitably adapted to receive from two to twenty, more preferably two to eight, strips of the first sub-group to be coated and at least one, and more preferably exactly one, strip of the second sub-group that is to remain uncoated. Clusters of three to twenty-one, more preferably three to nine, strips include most of the desired rod widths. A cluster of more than twenty-one, or nine, strips would consume a relatively high amount of coating, such as an adhesive, to adhere the strips to each other, which would make the solution less environmentally friendly.

Suitably, the apparatus is provided with at least two separate support bars, each of said at least two separate support bars having its own unique arrangement of ridge surfaces and grooves, the apparatus having a selection arrangement for bringing one of said at least two separate support bars at a time into position for functioning as the first support member. Thereby, the apparatus can be adjusted, in an efficient manner, from producing rods having one combination of width and height of the rods to produce rods having another combination of width and height of the rods.

To make the change easily and quickly, the selection arrangement preferably comprises a rotary magazine holding a plurality of parallel support bars, the magazine being a rotary device having a central axis of rotation parallel to central axes of the individual support bars, wherein each support bar has a unique arrangement of ridge surfaces and grooves.

In a most preferred embodiment, the magazine resembles a revolver magazine and holds at least three parallel and rotary support rolls, each of which has a unique arrangement of ridge surfaces and grooves.

In the rod manufacturing apparatus stated in the third paragraph above and comprising the selective strip coating apparatus, the object of the invention is achieved in that the rod manufacturing apparatus further comprises a rod pressing arrangement located downstream of the selective strip coating apparatus and adapted for pressing clusters of strips together to form sandwiched rod structures. By pressing the clusters of strips together to form sandwiched rod structures the joining of the strips is finished and a cost efficient and flexible joining of strips is provided.

A further basis for the cost efficient and flexible joining of strips is provided if the rod manufacturing apparatus further comprises a strip cutting device that is located upstream of the support bar and is adapted for cutting the plurality of parallel strips from a web-shaped board material.

### BRIEF DESCRIPTION OF THE DRAWINGS

In the following, the invention will be described in more detail with reference to preferred embodiments and the appended drawings.
- Fig. 1: is a schematic side view, partly in section, of a selective strip coating apparatus according to a preferred embodiment of the present invention and comprising a rotary magazine including three parallel support bars for supporting the strips.
- Fig. 2: is a schematic side view, partly in section, of the selective strip coating apparatus of Fig. 1 including a more detailed coater and also showing that the strips after coating are twisted a quarter of a turn.
- Fig. 3: is an enlarged portion of Fig. 1 and shows cross-sectional view of a strip supporting bar of Fig. 1 in the shape of a rotary roll having circumferential ridges and grooves.
- Fig. 4: is an isometric view of the rotary magazine including three rotary support rolls having circumferential ridges and grooves and a drive for rotation.
- Fig. 5: is an isometric view of part of a drive end of the rotary magazine while the ridges of one roll lift some of the strips up to contact with a coating roll and other strips remain in the grooves out of contact with the coating roll.
- Fig. 6: is an isometric view of the selective strip coating apparatus of Fig. 2.
- Fig. 7: is an isometric view from another direction of the selective strip coating apparatus of Fig. 2, and
- Fig. 8: is an isometric view showing the selective strip coating apparatus of Fig. 7 supplemented with a pressing arrangement for pressing clusters of strips together to form sandwiched rod structures.

### MODE(S) FOR CARRYING OUT THE INVENTION

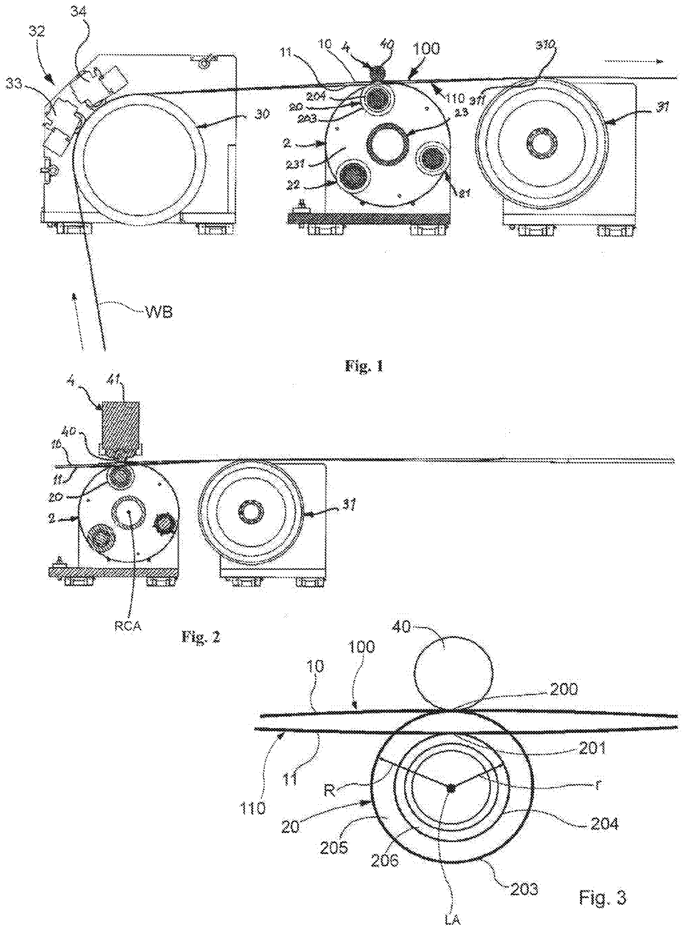

Fig. 1 shows schematically a selective strip coating apparatus according to a preferred embodiment of the present invention and comprising a first support member 20 and a second support member 31 located downstream of the first support member 20. Further, the strip coating apparatus includes a coater 4 for applying a coating to one face of a selected first sub-group 100 of parallel strips 10 when the selected sub group is supported by the first support member 20. The selected first sub-group 100 comprises at least two parallel strips 10 and is selected from a plurality of parallel strips 10, 11 advanced in a side by side relationship from the first support member 20 to the second support member 31. At least two strips 11 of said plurality of parallel strips 10, 11 not belonging to said selected first sub-group 100 of parallel strips 10 forming a second sub-group 110 of parallel strips 11.

To apply a coating to the parallel strips 10 of the selected first sub-group 100, they are advanced along a first path between the first 20 and second 31 support members. The first path extends from a first point 200, being located adjacent to the first support member 20 and at a first distance *R* (shown in Fig. 3) from a longitudinal axis LA of the first support member 20, to a second point 310, being located adjacent to the second support member 31. Simultaneously therewith the second sub-group 110 of parallel strips 11 is advanced along a second path between the first 20 and second 31 support members. The second path extends from a third point 201, that is located adjacent to the first support member 20 and at a second distance *r* (shown in Fig. 3) from said longitudinal axis LA of the first support member 20, said second distance r being shorter than said first distance *R*, to a fourth point 311 adjacent to the second support member 31. The fourth point 311 is located slightly upstream of the second point 310, but from a practical technical perspective the second and fourth points 310, 311 could more or less coincide. The coating is applied by means of a coating device 4, which in Fig. 1 is represented by a coating roll 40 included in the coating device 4. The coating device 4 is in coating contact with the selected first sub-group 100 of parallel strips 10 passing the first support member 20 at the first distance *R* to coat one side of the strips 10 of the selected first sub-group 100 of parallel strips 10, 11, while the strips 11 of the second sub-group 110 of parallel strips that simultaneously pass the first support member 20 at the second distance r are out of reach of the coating device 4 and remain uncoated.

In the embodiment shown in Fig. 1, an additional support member 30 for the strips 10, 11 is provided upstream of the first support member 31. The additional support member 30 forms part of a strip cutting device 32 which additionally comprises first and second cutting arrangements 33, 34 that use the support member 30 as an anvil and cuts the strips 10, 11 from a material web WB, for example a web of High Density Fiberboard (HDF) or Medium Density Fiberboard (MDF). The horizontal positions of the first and second cutting arrangements 33, 34 could be adjusted to obtain different widths of the strips 10, 11 formed by the cutting. The width of the strips 10, 11 as formed in the strip cutting device 32 will correspond to the height of the rods or laths formed downstream of the second support member 31, as described in more detail hereinafter.

All three support members, 30, 20, and 31 may be support bars, but preferably they are rotary rolls, and more preferred powered rotary rolls that assist in pulling/forwarding some strips 10, 11. As will be described hereinafter, the first support member 20 could be varied, and there may be, e.g., two alternative rolls 21, 22, and in this connection it may be beneficial to use a combined motor and transmission for all rolls 20, 21, 22, to have them jointly driven, which eliminates any need of start-up time and simplifies the design. The strips 10, 11 run under tension from support member 30 to support member 20 and further to support member 31. At support member 20, the group 100 of strips 10 to be coated is lifted a distance of R - *r* above the level of group 110 of strips 11 that are not to be coated.

Suitably, the first support member 20 is provided in the form of a support bar having a longitudinal axis LA and a plurality of ridge surfaces 203 located at the first distance R from the longitudinal axis LA of the first support member 20 and a plurality of grooves 204 arranged between the ridge surfaces 203 and located at the second distance r from the longitudinal axis LA of the first support member 20, as is best shown in Fig. 3. Further, each one of the strips 10 of the selected first sub-group 100 of parallel strips is forwarded on a respective one of the ridge surfaces 203 to be in contact with the coating device 4 to coat a face of the strips 10 of the first sub-group 100 of parallel strips, and each one of the strips 11 of the second sub-group 110 of parallel strips is forwarded in one of the grooves 204 to remain out of reach of the coating device 4. By using a support bar 20 having a plurality of ridge surfaces 203 and a plurality of grooves 204 between the ridge surfaces, a cost efficient and flexible gluing together of strips 10, 11 to form distance elements of different dimensions can be achieved.

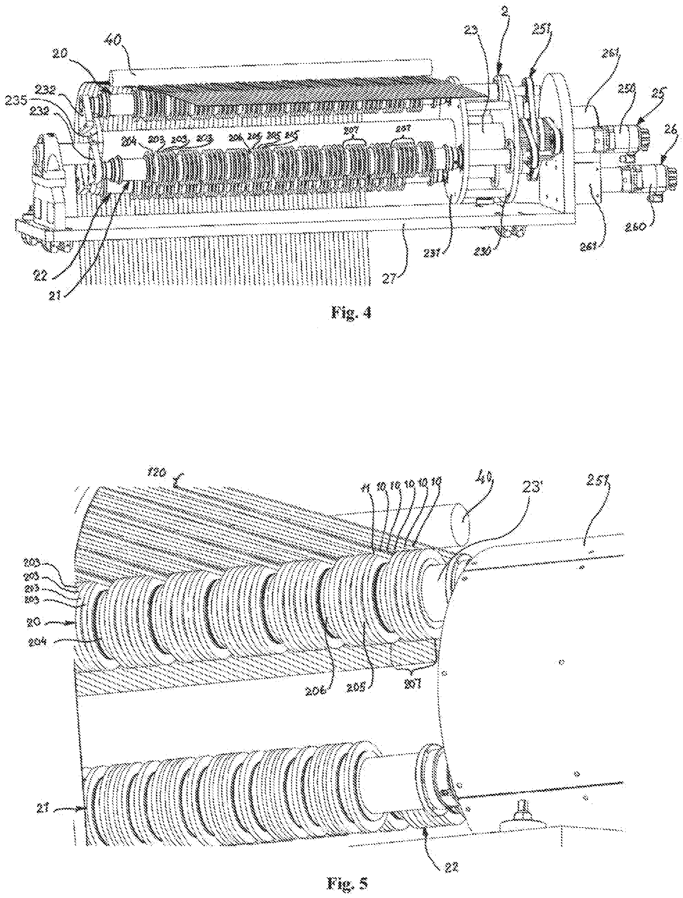

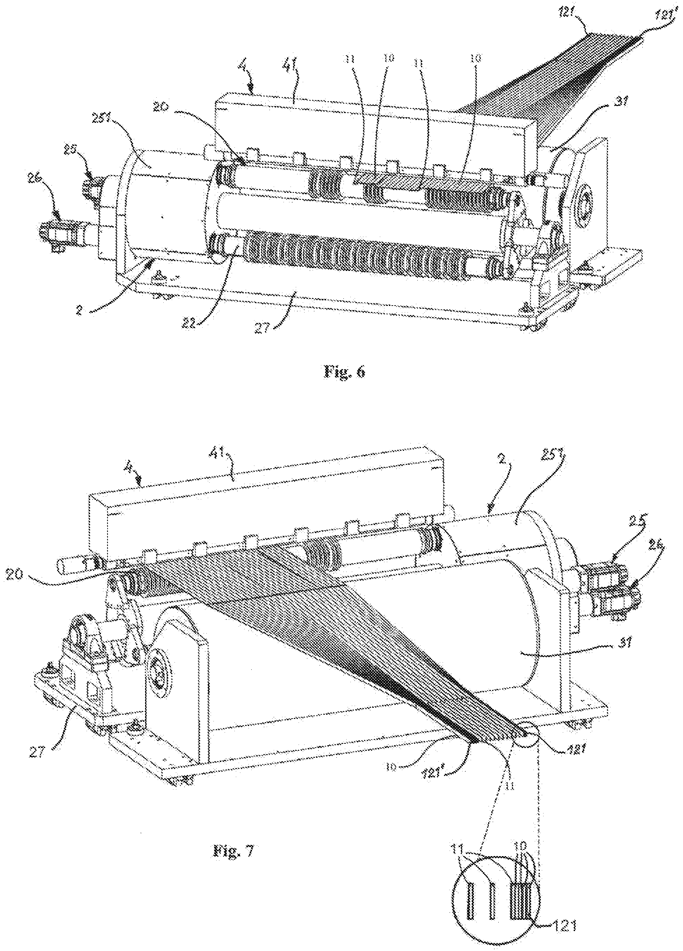

As is best shown in Fig. 5, the plurality of parallel strips 10. 11 preferably is arranged in a pattern of strip-groups 120, where each strip-group 120 contains at least one, and preferably at least two neighboring strips 10 from the selected first sub-group 100 of parallel strips to be coated and at least one strip 11 from the second sub-group 110 of parallel strips to remain uncoated. Thereby, only one side of the strips 10 which are to be piled on one another to form sandwiched clusters 121 and 121' (Figs. 6 and 7) in the shape of rods or laths, has to be coated, with the exception of the "last" strip 11 that is uncoated in each cluster 121 and 121'. As best seen in Figs 6 and 7 and especially the enlarged end view in Fig. 7, between groups of clusters 121, 121' forming laths or rods, there may be positioned a plurality of single strips 11 (unglued), which will serve as spacers/reinforcements in the low weight building element (e.g. a side wall of a book case or a table top) being produced. Hence, these single strips 11 are not to be included in a lath/rod. These single-strips 11 pass the coating device 4 unglued. Thereby it is possible to have all the strips 10 of the laths or rods 121, 121' and also all uncoated strips 11, both those strips 11 forming parts of a lath/rod, and those strips 11 intended to be single spacers/reinforcements, in the right order from the start of the process, all the way from the cutting of strips 10, 11 from the web material WB at the strip cutting device 32 to the fixing of all parts of the low weight building element, downstream of the second support member 31. Hence, in a preferred process not only the last strip in a lath/rod passes unglued, but also single-strips pass unglued, to avoid difficult sorting exercises, which otherwise may be needed.

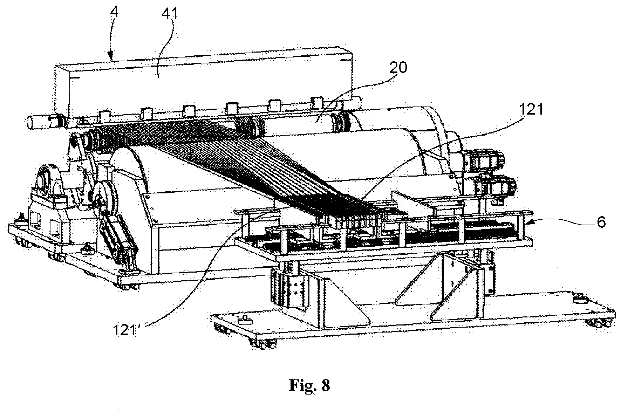

Thus, downstream of the first support member 20, the plurality of parallel strips 10, 11 is arranged in clusters 121 and 121', where each such cluster 121 and 121' comprises at least two strips 10, 11. The strips of each such cluster 121, 121' are being pressed together (see figure 8) by means of a rod pressing arrangement 6 to form respective rods, each such rod having a sandwiched structure comprising strips 10 and 11.

To achieve a reliable bonding of the layers in the sandwiched cluster 121 to each other, the coating that is applied to the selected first sub-group 100 of parallel strips 10 by means of the coating device 4 preferably is an adhesive type of coating.

The strips 10, 11 suitably are made from a wooden material, preferably a material selected among High Density Fiberboard (HDF) and Medium Density Fiberboard (MDF) and may be of a thickness of about 1 to 5 mm, more often about 2 to 3 mm, and cut, by means of the strip cutting device 32, to a constant width in the range of about 7-30 mm, preferably about 10-25 mm.

As described above, the apparatus for applying a coating to one face of a selected first sub-group 100 of parallel strips 10 comprises a support bar forming the first support member 20. The support bar 20 has a longitudinal axis LA and a plurality of ridge surfaces 203 located at a first distance *R* (shown in Fig. 3) from the axis of the support bar 20 and adapted for carrying strips 10 of the selected first sub-group 100 of parallel strips, and a plurality of grooves 204 arranged adjacent the ridge surfaces 203 and located at a second distance *r* (shown in Fig. 3) from the axis of the support bar 20. The second distance r is shorter than the first distance *R* and adapted for housing strips of the second sub-group 110 of parallel strips 11. Further, the apparatus comprises a coating device 4 positioned to be in operative contact with the strips 10 of the selected first sub-group 100 of strips carried by the respective ridge surfaces 203 of the support bar 20, while the strips 11 of the second sub-group 110 of strips will be carried in the grooves 204 and out of reach of the coating device 4 and remain uncoated.

As is best shown in Fig. 5, the support bar suitably has the form of a support roll 20, and the support roll preferably is a rotary support roll 20 adapted to rotate around its central axis LA, see Fig. 3, as the strips 10 of the first sub-group 100 are carried by the respective ridge surfaces 203. The ridge surfaces 203 and the grooves 204 extend circumferentially around the rotary support roll 20, as best illustrated in Fig. 5. Preferably, the rotary support roll 20 comprises a tubular shaft base 23' and a plurality of flange-like rings or discs 205 of outer radius *R* that are mounted on the shaft base 23' and have peripheral surfaces forming said ridge surfaces 203. If the discs 205 are axially fixed on the shaft base 23', the bottom the grooves 204 may be formed by the peripheral surface of the shaft base 23', if desired, but preferably a plurality of flange-like rings or discs 206 of outer radius *r* are mounted on the shaft base 23' and have peripheral surfaces forming the bottom surfaces of the grooves 204. The flange-like rings or discs 205 and 206 are pressed axially against one another by means of screws (not shown) at least one end of the shaft base 23'.

The coating device 4 preferably is an adhesive coating device having a reservoir 41 as shown in Figs. 2 and 6-8 for the adhesive, and the reservoir 41 has a bottom slot, in which a rotary coating roll 40 is mounted for transferring the adhesive from the reservoir 41 to the strips 10. The rotary coating roll 40 has a comparatively small diameter and may suitably have various structures on its peripheral surface. The roll 40 forms a bottom of the adhesive coating device 4, and a first doctor (not shown) makes sure that the downwards facing surface of the roll 40 carries an adhesive layer of desired thickness. Where the roll 40 touches the strips 10, the adhesive is being transferred to the strips 10. Adhesive remaining on the roll 40 is returned to the reservoir 41 past a second doctor (not shown), which may be set with a different gap toward the roll 40 than the first doctor, to supply a desired amount of adhesive as is known per se. Also the rotational speed of the roll 40 may be adjusted to increase or reduce the amount of adhesive, and more or less deep structural patterns in the peripheral surface of the roll 40 may be used to supply the desired amount of adhesive. This method of applying the adhesive is very well suited for this application, where strips 11 not to be coated are located at different locations along the roll 40.

The grooves 204 in the support bar or roll 20 suitably are arranged in such a way that the ridge surfaces 203 between two adjacent grooves 204 will receive at least one, and preferably two to twenty, more preferably two to eight, of the strips 10 of the selected first sub-group 100 of parallel strips to be coated. Further, as is best shown in Figs. 4-6, the grooves 204 and the ridge surfaces 203 are preferably arranged in such a way that they form a pattern of strip receiving ring or disc groups 207 corresponding to the strip-groups 120, where each strip receiving ring or disc group 207 will receive at least one strip 10 of the first sub-group 100 to be coated and at least one strip 11 of the second sub-group 110 that is to remain uncoated. Thereby, only one side of the strip(s) 10, which are to be piled on one another to form a sandwiched cluster 121 (Fig. 7) in the shape of a rod or lath, has to be coated, with the exception of the "last" strip 11 of each cluster 121. As shown in Figs. 2, and 6-8, after leaving the second support member 31, the strips 10 and 11 are rotated a quarter of a turn around their longitudinal axis, so that their width direction is changed from horizontal to vertical. Thus the coated side of each strip 10 in the strip group 120 now faces the uncoated side of an adjacent strip 10, with the exception that the coated side of the last strip 10 faces the uncoated strip 11. Equipment for rotating the strips a quarter of a full turn are previously known and constitute no part of the present specification.

Each strip receiving ring or disc group 207 is suitably adapted to receive at least one, more preferably from two to twenty, even more preferably two to eight, strips 10 of the first sub-group 100 to be coated and at least one, more preferably exactly one, strip 11 of the second sub-group 110 that is to remain uncoated. Clusters 121 of three to twenty-one, more preferably three to nine, strips include most of the desired rod widths.

Suitably, the apparatus is provided with at least two separate support bars or rolls 20, 21, 22 each of said at least two separate support bars or rolls 20, 21, 22 having its own unique arrangement of ridge surfaces 203 and grooves 204, and the apparatus has a selection arrangement 2, as illustrated in Fig. 4, for bringing one of said at least two separate support bars or rolls 20, 21, 22 at a time into position for functioning as the first support member 20. Thereby, the apparatus can, as an example, be changed from producing a first type of rods or laths having one combination of width and height, e.g. using the roll 20 to form first type of rods being formed from eight strips 10, 11, each having a strip thickness of 2 mm and a strip width of 12 mm, the rod formed thereby having a rod width of 8 x 2 mm =16 mm and a rod height of 12 mm to produce a second type of rods of another combination of width and height, e.g. using the roll 21 to form second type of rods being formed from 5 strips 10, 11, each having a strip thickness of 2.5 mm and a strip width of 15 mm, the rod formed thereby having a rod width of 5 x 2.5 mm =12.5 mm and a rod height of 15 mm.

To make the change easily and quickly, the selection arrangement preferably comprises a rotary magazine 2 holding a plurality of parallel support bars or rolls 20, 21, 22, the magazine 2 being a rotary device having a central axis RCA of rotation parallel to central axes of the individual support bars or rolls, and each support bar or roll 20, 21, 22 suitably has a unique arrangement of ridge surfaces 203 and grooves 204. In a most preferred embodiment shown in the drawings, the magazine 2 resembles a revolver "magazine" (*i.e.* a handgun revolving cylinder containing multiple chambers for rounds) and holds at least three parallel and rotary support rolls 20, 21, 22 each of which has a unique arrangement of ridge surfaces 203 and grooves 204.

As is best shown in Fig. 4, the magazine 2 has a central tubular shaft 23 and at a driven end of the shaft 23 a flange arrangement including two spaced apart large flanges 230, 231 for supporting one end of each of the support rolls 20, 21, 22 and at the other end of the shaft 23 a smaller flange 235 having an adjustable lug 232 for each one of the opposite ends of the three support rolls 20, 21, 22. A drive 26 is provided for rotating the magazine 2. The drive 26 includes a motor 260 driving a transmission 261 connected to the central tubular shaft 23 for rotating it. The transmission 261 may be a planetary gearing to give a desired reduction of the speed of the motor 260. Similarly, a drive 25 is provided for rotating the support rolls 20, 21, 22. The drive 25 includes a motor 250 driving a transmission 251 connected to all of the three support rolls 20, 21, 22 for rotating them. The transmission 251 includes a common central ring gear mounted in bearings on the central tubular shaft 23, a gear that is carried by an output shaft of the motor 250, the proximate end of each one of the support rolls 20, 21, 22 includes a gear, and toothed belts transmits the rotation of the gear on the motor 250 to the common central ring gear and from there to the gears of the support rolls 20, 21, 22. The two ends of the central tubular shaft 23 is mounted in bearings carried by a stand 27, and the belts and gears of transmission 251 are located between the stand 27 and the outer flange 230.

The selective strip coating apparatus preferably is included in a rod manufacturing apparatus in that a rod pressing arrangement 5 is located downstream of the selective strip coating apparatus and adapted for pressing said clusters 121 of strips 10, 11 together to form sandwiched rod structures. By pressing the clusters 121 of strips 10, 11 together to form sandwiched rod structures, the joining of the strips 10, 11 is finished and a cost efficient and flexible joining of strips is provided.

A further basis for the cost efficient and flexible joining of strips 10, 11 is provided if the rod manufacturing apparatus further comprises the strip cutting device 32 that is located upstream of the selective strip coating apparatus and adapted for cutting the plurality of parallel strips 10, 11 from the web-shaped board material WB. Equipment for such cutting is previously known and requires no detailed description in the present specification.

### INDUSTRIAL APPLICABILITY

The present invention is applicable for producing distance elements of different dimensions, such as rods or laths to be used in low weight building elements for furniture.

## Claims

1. A method of applying a coating to one face of a selected first sub-group (100) of parallel strips (10), the selected first sub-group (100) of parallel strips comprising at least two parallel strips (10) and being selected from a plurality of parallel strips (10, 11) advanced in a side by side relationship from a first support member (20) to a second support member (31), at least two strips (11) of said plurality of parallel strips not belonging to said selected first sub-group (100) of parallel strips (10, 11) forming a second sub-group (110) of parallel strips, the method **characterized by** comprising:
- advancing the selected first sub-group (100) of parallel strips along a first path between the first (20) and second support (31) members, said first path extending from a first point (200), being located adjacent to the first support member (20) and at a first distance (*R*) from a longitudinal axis (LA) of the first support member (20), to a second point (310), being located adjacent to the second support member (31);
- simultaneously therewith advancing the second sub-group (110) of parallel strips (11) along a second path between the first (20) and second (31) support members, said second path extending from a third point (201), being located adjacent to the first support member (20) and at a second distance (*r*) from said longitudinal axis (LA) of the first support member (20), said second distance (*r*) being shorter than said first distance (*R*), to a fourth point (311) adjacent to the second support member (31); and
- applying the coating by means of a coating device (4) being in coating contact with the selected first sub-group (100) of parallel strips (10) passing the first support member (20) at the first distance (*R*) to coat one side of the strips (10) of the selected first sub-group (100) of parallel strips, while the strips (11) of the second sub-group (110) of parallel strips simultaneously passing the first support member (20) at the second distance (*r*) being out of reach of the coating device (4) and remaining uncoated.

2. A method as claimed in claim 1, further comprising:
- arranging the plurality of parallel strips (10, 11) in a pattern of strip-groups (120), wherein each strip-group (120) contains at least one, and more preferably at least two, neighboring strip(s) (10) from the selected first sub-group (100) of parallel strips to be coated, and at least one strip (11) from the second sub-group (110) of parallel strips to remain uncoated.

3. A method as claimed in claim 1 or 2, further comprising:
- providing said first support member (20) in the form of a support bar having a longitudinal axis (LA) and a plurality of ridge surfaces (203) located at the first distance (*R*) from the longitudinal axis (LA) of the first support member (20) and a plurality of grooves (204) arranged between the ridge surfaces (203) and located at the second distance (*r*) from the longitudinal axis (LA) of the first support member (20);
- forwarding each one of the strips (10) of the selected first sub-group (100) of parallel strips on a respective one of the ridge surfaces (203) to be in contact with the coating device (4) to coat a face of the strips (10) of the first sub-group (100) of parallel strips; and
- forwarding each one of the strips (11) of the second sub-group (110) of parallel strips in one of the grooves (204) to remain out of reach of the coating device (4).

4. A method as claimed in any one of claims 1-3, wherein the coating that is applied to the selected first sub-group (100) of parallel strips (10) is an adhesive type of coating.

5. A method as claimed in any one of claims 1-4, wherein the strips (10, 11) are made from a wooden material, preferably a material selected among High Density Fiberboard (HDF) and Medium Density Fiberboard (MDF).

6. A method as claimed in any one of claims 1-5, wherein the plurality of parallel strips (10, 11) is, downstream of the first support member (20), arranged in clusters (121), each such cluster (121) comprising at least two, more preferably at least three, strips (10, 11), the strips of each such cluster (121) being pressed together to form a rod or lath having a sandwiched structure.

7. A method as claimed in claim 6, wherein each cluster (121) comprises at least one, and more preferably two to twenty, strip(s) (10) of the selected first sub-group (100) of parallel strips (10) and exactly one strip (11) of the second sub-group (110) of parallel strips.

8. A selective strip coating apparatus for applying a coating to one face of a selected first sub-group (100) of parallel strips (10), the selected first sub-group (100) of parallel strips comprising at least two parallel strips (10) and being selected from a plurality of parallel strips (10, 11) advanced in a side by side relationship from a first support member (20) to a second support member (31), at least two strips (11) of said plurality of parallel strips (10, 11) not belonging to said selected first sub-group (100) of parallel strips (10) forming a second sub-group (110) of parallel strips (11), the apparatus **characterized by** comprising:
- a support bar (20) forming the first support member and having a longitudinal axis (LA) and a plurality of ridge surfaces (203) located at a first distance (*R*) from the axis (LA) of the support bar (20) and adapted for carrying strips (10) of the selected first sub-group (100) of parallel strips, and a plurality of grooves (204) arranged adjacent the ridge surfaces (203) and located at a second distance (*r*) from the axis (LA) of the support bar (20), said second distance (*r*) being shorter than said first distance (*R*), said grooves (204) being adapted for housing strips (11) of the second sub-group (110) of parallel strips; and a coating device (4) positioned to be in operative contact with the strips (10) of the selected first sub-group (100) of strips carried by the respective ridge surfaces (203) of the support bar (20), while the strips (11) of the second sub-group (110) of strips will be carried in the grooves (204) and out of reach of the coating device (4) and remain uncoated.

9. An apparatus according to claim 8, wherein the apparatus further comprises a strip cutting device (32) that is located upstream of the support bar (20) and is adapted for cutting the plurality of parallel strips (10, 11) from a web-shaped board material (WB).

10. An apparatus according to any one of claims 8-9, wherein the support bar (20) has the form of a support roll, preferably being arranged to provide a pulling force to at least some of the strips (10).

11. An apparatus according to claim 10, wherein the support roll is a rotary support roll (20) adapted to rotate around its central axis (LA) as the first sub-group (100) of strips (10) are carried by the respective ridge surfaces (203), wherein the ridge surfaces (203) and the grooves (204) extend circumferentially around the rotary support roll (20), preferably the rotary support roll (20) being arranged to provide a pulling force to at least some of the strips (10).

12. An apparatus according to any one of claims 8-11, wherein the coating device (4) is an adhesive coating device.

13. An apparatus as claimed in any one of claims 8-12, wherein the grooves (204) in the support bar (20) are arranged in such a way that the ridge surfaces (203) between two adjacent grooves (204) will receive a plurality of the strips (10) of the selected first sub-group (100) of parallel strips to be coated.

14. An apparatus as claimed in any one of claims 8-13, wherein the grooves (204) and the ridge surfaces (203) are arranged in such a way that they form a pattern of strip receiving groups (207), where each strip receiving group (207) will receive at least one strip (10) of the first sub-group (100) to be coated and at least one strip (11) of the second sub-group (110) that is to remain uncoated.

15. An apparatus as claimed in claim 14, wherein each strip receiving group (207) is adapted to receive from two to twenty, more preferably two to eight, strips (10) of the first sub-group (100) to be coated and at least one, and more preferably exactly one, strip (11) of the second sub-group (110) that is to remain uncoated.

16. An apparatus as claimed in any one of claims 8-15, wherein the apparatus is provided with at least two separate support bars (20, 21, 22), each of said at least two separate support bars (20, 21, 22) having its own unique arrangement of ridge surfaces (203) and grooves (204), the apparatus having a selection arrangement (2) for bringing one of said at least two separate support bars (20, 21, 22), at a time into position for functioning as the first support member (20).

17. An apparatus as claimed in claim 16, wherein the selection arrangement comprises a rotary magazine (2) holding a plurality of parallel support bars (20, 21, 22), the magazine (2) being a rotary device having a central axis of rotation (RCA) parallel to central axes (LA) of the individual support bars (20, 21, 22), wherein each support bar (20, 21, 22) has a unique arrangement of ridge surfaces (203) and grooves (204).

18. An apparatus according to claim 17, wherein the magazine (2) resembles a revolver magazine and holds at least three parallel and rotary support rolls (20, 21, 22), each of which has a unique arrangement of ridge surfaces (203) and grooves (204), and wherein preferably said rotary support rolls (20, 21, 22) are powered by means of a drive (25) to apply a pulling force to at least some of the strips (10), and more preferred wherein all support rolls (20, 21, 22) are jointly powered by the drive (25).

19. A rod manufacturing apparatus, which comprises a selective strip coating apparatus according to any one of claims 8-18, the rod manufacturing apparatus further comprising a rod pressing arrangement (6) located downstream of the selective strip coating apparatus and adapted for pressing clusters (121, 121') of strips (10, 11) together to form sandwiched rod structures.

## Patentansprüche

1. Ein Verfahren zum Aufbringen einer Beschichtung auf eine Seite einer ausgewählten ersten Untergruppe (100) von parallelen Streifen (10), wobei die ausgewählte erste Untergruppe (100) paralleler Streifen mindestens zwei parallele Streifen (10) umfasst und ausgewählt ist aus einer Vielzahl von parallelen Streifen (10, 11), die in einer nebeneinander liegenden Beziehung von einem ersten Abstützteil (20) zu einem zweiten Abstützteil (31) vorgeschoben werden, wobei mindestens zwei Streifen (11) aus der Vielzahl von parallelen Streifen, die nicht zu der ausgewählten ersten Untergruppe (100) paralleler Streifen (10, 11) gehören, eine zweite Untergruppe (110) paralleler Streifen bilden, wobei das Verfahren **dadurch gekennzeichnet ist, dass** es umfasst:
- Vorschieben der ausgewählten ersten Untergruppe (100) paralleler Streifen entlang eines ersten Pfades zwischen dem ersten (20) und dem zweiten Abstützteil (31), wobei sich der erste Pfad von einem ersten Punkt (200) aus erstreckt, der sich neben dem ersten Abstützteil (20) und in einem ersten Abstand (R) von einer Längsachse (LA) des ersten Abstützteils (20)befindet, bis zu einem zweiten Punkt (310), der sich neben dem zweiten Abstützteil (31) befindet;
- gleichzeitig damit Vorschieben der zweiten Untergruppe (110) paralleler Streifen (11) entlang eines zweiten Pfades zwischen dem ersten (20) und dem zweiten Abstützteil (31), wobei sich der zweite Weg von einem dritten Punkt (201) aus erstreckt, der sich neben dem ersten Abstützteil (20) und in einem zweiten Abstand (r) von der Längsachse (LA) des ersten Abstützteils (20) befindet, wobei der zweite Abstand (r) kürzer als der erste Abstand (R) ist, zu einem vierten Punkt (311) neben dem zweiten Abstützteil (31); und
- Aufbringen der Beschichtung mittels einer Beschichtungsvorrichtung (4), die in Beschichtungskontakt mit der ausgewählten ersten Untergruppe (100) paralleler Streifen (10) steht, die das erste Abstützteil (20) in dem ersten Abstand (R) passiert, um eine Seite der Streifen (10) der ausgewählten ersten Untergruppe (100) paralleler Streifen zu beschichten, während die Streifen (11) der zweite Untergruppe (110) paralleler Streifen, die gleichzeitig das erste Abstützteil (20) in dem zweiten Abstand (r) passieren, außerhalb der Reichweite der Beschichtungsvorrichtung (4) und unbeschichtet bleiben.

2. Verfahren nach Anspruch 1, ferner umfassend:
- Anordnen der Vielzahl von parallelen Streifen (10, 11) in einem Muster von Streifengruppen (120), wobei jede Streifengruppe (120) mindestens einen und bevorzugter mindestens zwei benachbarte Streifen (10) aus der ausgewählten ersten Untergruppe (100) von zu beschichtenden parallelen Streifen enthält, und mindestens ein Streifen (11) aus der zweiten Untergruppe (110) von parallelen Streifen, die unbeschichtet bleiben sollen.

3. Verfahren nach Anspruch 1 oder 2, ferner umfassend:
- Bereitstellen des ersten Abstützteils (20) in Form einer Stützstange mit einer Längsachse (LA) und einer Vielzahl von Kantenflächen (203), die sich in dem ersten Abstand (R) von der Längsachse (LA) des ersten Abstützteils(20) befinden, und einer Vielzahl von Nuten (204), die zwischen den Kantenflächen (203) angeordnet sind und sich in dem zweiten Abstand (r) von der Längsachse (LA) des ersten Abstützteils (20) befinden,
- Weiterleiten jedes einzelnen Streifens (10) der ausgewählten ersten Untergruppe (100) von parallelen Streifen auf einer jeweiligen Kantenfläche (203), die in Kontakt mit der Beschichtungsvorrichtung (4) stehen soll, um eine Seite der Streifen (10) der ersten Untergruppe (100) von parallelen Streifen zu beschichten, und
- Weiterleiten jedes einzelnen Streifens (11) der zweiten Untergruppe (110) von parallelen Streifen in einer der Nuten (204), um außerhalb der Reichweite der Beschichtungsvorrichtung zu bleiben (4).

4. Verfahren nach einem der Ansprüche 1 bis 3, wobei die Beschichtung, die auf die ausgewählte erste Untergruppe (100) paralleler Streifen (10) aufgebracht wird, ein Klebestoffbeschichtungstyp ist.

5. Verfahren nach einem der Ansprüche 1 bis 4, wobei die Streifen (10, 11) aus einem Holzmaterial hergestellt sind, vorzugsweise einem Material, das ausgewählt ist aus einer Faserplatte hoher Dichte (HDF) und einer Faserplatte mittlerer Dichte (MDF).

6. Verfahren nach einem der Ansprüche 1 bis 5, wobei die Vielzahl von parallelen Streifen (10, 11) stromabwärts des ersten Abstützteils (20) in Clustern (121) angeordnet sind, wobei jeder solche Cluster (121) mindestens zwei, weiter bevorzugt mindestens drei Streifen (10, 11) umfasst, wobei die Streifen jedes solchen Clusters (121) zusammengedrückt werden, um eine Stange oder Latte mit Sandwichstruktur zu bilden.

7. Verfahren nach Anspruch 6, wobei jeder Cluster (121) mindestens einen, und weiter bevorzugt zwei bis zwanzig Streifen (10) der ausgewählten ersten Untergruppe (100) von parallelen Streifen (10) und genau einen Streifen (11) der zweiten Untergruppe (110) von parallelen Streifen umfasst.

8. Selektive Streifenbeschichtungsvorrichtung zum Aufbringen einer Beschichtung auf eine Seite einer ausgewählten erste Untergruppe (100) paralleler Streifen (10), wobei die ausgewählte erste Untergruppe (100) von parallele Streifen mindestens zwei parallele Streifen (10) umfasst und aus einer Vielzahl von parallelen Streifen (10, 11) ausgewählt ist, die in einer nebeneinander liegenden Beziehung von einem ersten Abstützteil (20) zu einem zweiten Abstützteil (31) vorgeschoben werden, wobei mindestens zwei Streifen (11) aus der Vielzahl von parallelen Streifen (10, 11), die nicht zu der ausgewählten ersten Untergruppe (100) von parallelen Streifen (10) gehören, eine zweite Untergruppe (110) paralleler Streifen (11) bilden, wobei die Vorrichtung **dadurch gekennzeichnet ist, dass** sie umfasst:
- eine Stützstange (20), die das erste Abstützteil bildet und eine Längsachse (LA) und eine Vielzahl von Kantenflächen (203) aufweist, die in einem ersten Abstand (R) von der Achse (LA) der Stützstange (20) angeordnet sind und zum Tragen von Streifen (10) der ausgewählten ersten Untergruppe (100) paralleler Streifen angepasst ist, und eine Vielzahl von Nuten(204), die neben den Kantenflächen (203) angeordnet sind und sich in einem zweiten Abstand (r) von der Achse (LA) der Stützstange (20) befinden, wobei der zweite Abstand (r) kürzer ist als der erste Abstand (R), wobei die Nuten (204) für die Aufnahme von Streifen (11) der zweiten Untergruppe (110) paralleler Streifen angepasst sind; und eine Beschichtungsvorrichtung (4), die positioniert ist, um in operativem Kontakt mit den Streifen (10) der ausgewählten ersten Untergruppe (100) von Streifen zu sein, die von den jeweiligen Kantenflächen (203) der Stützstange (20) getragen sind, während die Streifen (11) der zweiten Untergruppe (110) von Streifen in den Nuten (204) und außerhalb der Reichweite der Beschichtungsvorrichtung (4) getragen sind und unbeschichtet bleiben.

9. Vorrichtung nach Anspruch 8, wobei die Vorrichtung ferner eine Streifenschneidvorrichtung (32) umfasst, die sich stromaufwärts der Stützstange (20) befindet und zum Schneiden der Vielzahl von parallelen Streifen (10, 11) aus einem bahnförmigen Plattenmaterial (WB) geeignet ist.

10. Vorrichtung nach einem der Ansprüche 8 bis 9, wobei die Stützstange (20) die Form einer Stützrolle hat, die vorzugsweise so angeordnet ist, dass sie mindestens eine Zugkraft für einige der Streifen (10) bereitgestellt.

11. Vorrichtung nach Anspruch 10, wobei die Stützrolle eine rotierende Stützrolle (20) ist, die angepasst ist, um sich um ihre Mittelachse (LA) zu drehen, wenn die erste Untergruppe (100) von Streifen (10) von den jeweiligen Kantenflächen (203) getragen ist, wobei die Kantenflächen (203) und die Nuten (204) sich in Umfangsrichtung um die rotierende Stützrolle (20) erstrecken, wobei vorzugsweise die rotierende Stützrolle (20) so angeordnet ist, dass sie eine Zugkraft auf zumindest einige der Streifen (10) ausübt.

12. Vorrichtung nach einem der Ansprüche 8 bis 11, wobei die Beschichtungsvorrichtung (4) eine Klebstofffbeschichtungsvorrichtung ist.

13. Vorrichtung nach einem der Ansprüche 8 bis 12, wobei die Nuten (204) in der Stützstange (20) so angeordnet sind, dass die Kantenflächen (203) zwischen zwei benachbarten Nuten (204) mehrere der Streifen (10) der ausgewählten ersten Untergruppe (100) der zu beschichtenden parallelen Streifen aufnehmen.

14. Vorrichtung nach einem der Ansprüche 8 bis 13, wobei die Nuten (204) und die Kantenflächen (203) so angeordnet sind, dass sie ein Muster von Streifenaufnahmegruppen (207) bilden, wobei jede Streifenaufnahmegruppe (207) mindestens einen Streifen (10) der ersten zu beschichtenden Untergruppe (100) und mindestens einen Streifen (11) der zweiten Untergruppe (110), der unbeschichtet bleiben soll, aufnimmt.

15. Vorrichtung nach Anspruch 14, wobei jede Streifenaufnahmegruppe (207) angepasst ist, um zwei bis zwanzig, weiter bevorzugt zwei bis acht Streifen (10) der ersten zu beschichtenden Untergruppe (100) und mindestens einen und weiter bevorzugt genau einen Streifen (11) der zweiten Untergruppe (110), der unbeschichtet bleiben soll, aufzunehmen.

16. Vorrichtung nach einem der Ansprüche 8 bis 15, wobei die Vorrichtung mit mindestens zwei getrennten Stützstangen (20, 21, 22) versehen ist, wobei jede von den mindestens zwei getrennten Stützstangen (20, 21, 22) eine eigene einzigartige Anordnung von Kantenoberflächen (203) und Nuten (204) aufweist, wobei die Vorrichtung eine Auswahlanordnung (2) aufweist, um eine der mindestens zwei getrennten Stützstangen (20, 21, 22) zur Zeit in Position zu bringen, um als das erste Abstützteil (20) zu funktionieren.

17. Vorrichtung nach Anspruch 16, wobei die Auswahlanordnung ein rotierendes Magazin (2) umfasst, das mehrere parallele Stützstangen (20, 21, 22) enthält,wobei das Magazin (2) eine rotierende Vorrichtung mit einer zentralen Rotationsachse (RCA) parallel zu Mittelachsen (LA) der einzelnen Stützstangen (20, 21, 22) ist, wobei jede Stützstange (20, 21, 22) eine einzigartige Anordnung von Kantenflächen (203) und Nuten (204) hat.

18. Vorrichtung nach Anspruch 17, wobei das Magazin (2) einem Revolvermagazin ähnelt und mindestens drei parallele und rotierende Stützrollen (20, 21, 22) enthält, von denen jede eine einzigartige Anordnung von Kantenoberflächen (203) und Nuten (204) aufweist und vorzugsweise die rotierenden Stützrollen (20, 21, 22) mittels eines Antriebs (25) angetrieben sind, um eine Zugkraft auf mindestens einige der Streifen (10) ausüben, und weiter bevorzugt, alle Stützrollen (20, 21, 22) gemeinsam von dem Antrieb (25) angetrieben sind.

19. Stangenherstellungsvorrichtung, die eine selektive Streifenbeschichtungsvorrichtung gemäß einem der Ansprüche 8 bis 18 umfasst,wobei die Stangenherstellungsvorrichtung weiter eine Stangenpressanordnung (6) umfasst, die stromabwärts der selektiven Streifenbeschichtungsvorrichtung angeordnet ist und zum Zusammenpressen von Clustern (121, 121 ") von Streifen (10, 11) geeignet ist, um Sandwich-Stangenstrukturen zu bilden.

## Revendications

1. Procédé d'application d'un revêtement à une face d'un premier sous-groupe sélectionné (100) de rubans parallèles (10), le premier sous-groupe sélectionné (100) de rubans parallèles comprenant au moins deux rubans parallèles (10) et étant sélectionné parmi des rubans d'une pluralité de rubans parallèles (10, 11) avancés dans une relation côte à côte d'un premier élément support (20) à un second élément support (31), au moins deux rubans (11) de ladite pluralité de rubans parallèles n'appartenant pas audit premier sous-groupe sélectionné (100) de rubans parallèles (10, 11) formant un second sous-groupe (110) de rubans parallèles, le procédé étant **caractérisé en ce qu'**il comprend :
- avancer le premier sous-groupe sélectionné (100) de rubans parallèles le long d'un premier trajet entre les premier (20) et second (31) éléments supports, ledit premier trajet s'étendant d'un premier point (200), situé adjacent au premier élément support (20) et à une première distance (R) d'un axe longitudinal (LA) du premier élément support (20) à un deuxième point (310), situé adjacent au second élément support (31) ;
- simultanément à ladite avance du premier sous-groupe sélectionné (100), avancer le second sous-groupe (110) de rubans parallèles (11) le long d'un second trajet entre les premier (20) et second (31) éléments supports, ledit second trajet s'étendant d'un troisième point (201), situé adjacent au premier élément support (20) et à une seconde distance (r) dudit axe longitudinal (LA) du premier élément support (20), ladite seconde distance (r) étant plus courte que ladite première distance (R), à un quatrième point (311) adjacent au second élément support (31) ; et
- appliquer le revêtement au moyen d'un dispositif de revêtement (4) en contact avec le premier sous-groupe sélectionné (100) de rubans parallèles (10) en faisant passer le premier élément support (20) à la première distance (R) de façon à revêtir un côté des rubans (10) du premier sous-groupe sélectionné (100) de rubans parallèles, tandis que les rubans (11) du second sous-groupe (110) de rubans parallèles passant simultanément sur le premier élément support (20) à la seconde distance (r) étant hors d'atteinte du dispositif de revêtement (4) et demeurant non revêtus.

2. Procédé selon la revendication 1, comprenant en outre l'étape consistant à :
- organiser les rubans de la pluralité de rubans parallèles (10, 11) selon un motif de groupes de rubans (120), dans lequel chaque groupe de rubans (120) contient au moins un, et plus idéalement au moins deux, rubans voisins (10) issus du premier sous-groupe sélectionné (100) de rubans parallèles devant être revêtus, et au moins un ruban (11) issu du second sous-groupe (110) de rubans parallèles qui demeure non revêtu.

3. Procédé selon la revendication 1 ou la revendication 2, comprenant en outre:
- réaliser ledit premier élément support (20) sous la forme d'une barre de support comportant un axe longitudinal (LA) et une pluralité de surfaces nervurées (203) situées à la première distance (*R*) de l'axe longitudinal (LA) du premier élément support (20) et une pluralité de rainures (204) ménagées entre les surfaces nervurées (203) et situées à la seconde distance (*r*) de l'axe longitudinal (LA) du premier élément support (20) ;
- transférer individuellement tous les rubans (10) du premier sous-groupe sélectionné (100) de rubans parallèles sur une surface respective des surfaces nervurées (203) de sorte qu'ils se trouvent en contact avec le dispositif de revêtement (4) à des fins de revêtement d'une face des rubans (10) du premier sous-groupe (100) de rubans parallèles ; et
- transférer individuellement tous les rubans (11) du second sous-groupe (110) de rubans parallèles dans l'une des rainures (204) de sorte qu'ils demeurent hors d'atteinte du dispositif de revêtement (4).

4. Procédé selon l'une quelconque des revendications 1 à 3, dans lequel le revêtement appliqué au premier sous-groupe sélectionné (100) de rubans parallèles (10) est un revêtement de type adhésif.

5. Procédé selon l'une quelconque des revendications 1 à 4, dans lequel les rubans (10, 11) sont constitués d'un matériau de bois, idéalement d'un matériau sélectionné entre un panneau de fibres à haute densité (HDF) et un panneau de fibres à densité moyenne (MDF).

6. Procédé selon l'une quelconque des revendications 1 à 5, dans lequel les rubans de la pluralité de rubans parallèles (10, 11) sont, en aval du premier élément support (20), organisés en groupes (121), chacun de ces groupes (121) comprenant au moins deux, idéalement au moins trois, rubans (10, 11), les rubans de chacun de ces groupes (121) étant pressés conjointement pour former une tige ou une latte ayant une structure en sandwich.

7. Procédé selon la revendication 6, dans lequel chaque groupe (121) comprend au moins un, et plus idéalement deux à vingt rubans (10) du premier groupe sélectionné (100) de rubans parallèles (10) et exactement un ruban (11) du second sous-groupe (110) de rubans parallèles.

8. Appareil de revêtement sélectif de rubans destiné à appliquer un revêtement à une face d'un premier sous-groupe sélectionné (100) de rubans parallèles (10), le premier sous-groupe sélectionné (100) de rubans parallèles comprenant au moins deux rubans parallèles (10) et étant sélectionné à partir d'une pluralité de rubans parallèles (10, 11) avancés dans une relation côte à côte d'un premier élément support (20) à un second élément support (31), au moins deux rubans (11) de ladite pluralité de rubans parallèles (10, 11) n'appartenant pas audit premier sous-groupe sélectionné (100) de rubans parallèles (10) formant un second sous-groupe (110) de rubans parallèles (11), l'appareil étant **caractérisé en ce qu'**il comprend :
- une barre de support (20) formant le premier élément support et comportant un axe longitudinal (LA) et une pluralité de surfaces nervurées (203) situées à une première distance (R) de l'axe (LA) de la barre de support (20) et étant aptes à transporter des rubans (10) du premier sous-groupe sélectionné (100) de rubans parallèles, et une pluralité de rainures (204) ménagées adjacentes aux surfaces nervurées (203) et situées à une seconde distance (*r*) de l'axe (LA) de la barre de support (20), ladite seconde distance (*r*) étant plus courte que ladite première distance (*R*), lesdites rainures (204) étant aptes à loger des rubans (11) du second sous-groupe (110) de rubans parallèles ; et un dispositif de revêtement (4) positionné pour se trouver en contact fonctionnel avec les rubans (10) du premier sous-groupe sélectionné (100) de rubans transportés par les surfaces nervurées respectives (203) de la barre de support (20), tandis que les rubans (11) du second sous-groupe (110) de rubans seront transportés dans les rainures (204) et hors d'atteinte du dispositif de revêtement (4) et demeureront non revêtus.

9. Appareil selon la revendication 8, dans lequel l'appareil comprend en outre un dispositif de coupe de rubans (32) situé en amont de la barre de support (20) et apte à couper les rubans de la pluralité de rubans parallèles (10, 11) à partir d'un matériau de panneau de fibres sous forme de bande (WB).

10. Appareil selon la revendication 8 ou 9, dans lequel la barre de support (20) a la forme d'un rouleau de support, idéalement conçu pour appliquer une force de traction à au moins certains des rubans (10).

11. Appareil selon la revendication 10, dans lequel le rouleau de support est un rouleau de support rotatif (20) apte à tourner autour de son axe central (LA) lors du transport du premier sous-groupe (100) de rubans (10) par les surfaces nervurées respectives (203), dans lequel les surfaces nervurées (203) et les rainures (204) s'étendent de manière circonférentielle autour du rouleau de support rotatif (20), le rouleau de support rotatif (20) étant idéalement prévu pour appliquer une force de traction à au moins certains des rubans (10).

12. Appareil selon l'une quelconque des revendications 8 à 11, dans lequel le dispositif de revêtement (4) est un dispositif de revêtement d'adhésif.

13. Appareil selon l'une quelconque des revendications 8 à 12, dans lequel les rainures (204) ménagées dans la barre de support (20) sont ménagées de sorte que les surfaces nervurées (203) situées entre deux rainures adjacentes (204) recevront une pluralité des rubans (10) du premier sous-groupe sélectionné (100) de rubans parallèles devant être revêtus.

14. Appareil selon l'une quelconque des revendications 8 à 13, dans lequel les rainures (204) et les surfaces nervurées (203) sont ménagées de telle sorte qu'elles forment un motif de groupes de réception de rubans (207), chaque groupe de réception de rubans (207) recevra au moins un ruban (10) du premier sous-groupe (100) devant être revêtu et au moins un ruban (11) du second sous-groupe (110) qui doit demeurer non revêtu.

15. Appareil selon la revendication 14, dans lequel chaque groupe de réception de rubans (207) est conçu pour recevoir de deux à vingt, plus idéalement de deux à huit rubans (10) du premier sous-groupe (100) devant être revêtus et au moins un, et plus idéalement exactement un, ruban (11) du second sous-groupe (110) qui doit demeurer non revêtu.

16. Appareil selon l'une quelconque des revendications 8 à 15, dans lequel l'appareil est pourvu d'au moins deux barres de support distinctes (20, 21, 22), chacune desdites au moins deux barres de support distinctes (20, 21, 22) comportant son propre agencement unique de surfaces nervurées (203) et de rainures (204), l'appareil comportant un agencement de sélection (2) permettant d'amener une barre desdites au moins deux barres de support distinctes (20, 21, 22) à la fois en position de sorte qu'elle serve de premier élément support (20).

17. Appareil selon la revendication 16, dans lequel l'agencement de sélection comprend un chargeur rotatif (2) contenant une pluralité de barres de support parallèles (20, 21, 22), le chargeur (2) étant un dispositif rotatif dont l'axe central de rotation (RCA) est parallèle aux axes centraux (LA) des barres de support individuelles (20, 21, 22), dans lequel chaque barre de support (20, 21, 22) comporte un agencement unique de surfaces nervurées (203) et de rainures (204).

18. Appareil selon la revendication 17, dans lequel le chargeur (2) ressemble à un chargeur de revolver et contient au moins trois rouleaux de support parallèles et rotatifs (20, 21, 22), comportant individuellement un agencement unique de surfaces nervurées (203) et de rainures (204), et dans lequel, idéalement, lesdits rouleaux de support rotatifs (20, 21, 22) sont mis en mouvement au moyen d'un dispositif d'entraînement (25) pour appliquer une force de traction à au moins certains des rubans (10), et l'on préfère davantage dans lequel tous les rouleaux de support (20, 21, 22) sont mis en mouvement conjointement par le dispositif d'entraînement (25).

19. Appareil de fabrication de tiges, comprenant un appareil de revêtement sélectif de rubans selon l'une quelconque des revendications 8 à 18, l'appareil de fabrication de tiges comprenant en outre un agencement de pression de tiges (6) situé en aval de l'appareil de revêtement sélectif de rubans et conçu pour presser conjointement des groupes (121, 121') de rubans (10, 11) pour former des structures de tiges en sandwich.
